# EUROPÄISCHE PATENTSCHRIFT

(11) **EP 1 902 828 B1**
(45) Veröffentlichungstag und Bekanntmachung des Hinweises auf die Patenterteilung: **22.12.2010**
(21) Anmeldenummer: 07017941.1
(22) Anmeldetag: 13.09.2007
(51) Int. Cl.: B29C 47/92, B29C 47/34

(54) **Verfahren zur Bestimmung einer Ortskoordinate eines Punkts an einem aus einem Extrusionswerkzeug dringenden Strang**
Method for determining the location coordinates of a point on a string from an extrusion tool
Procédé de détermination d'une coordonnée de lieu d'un point sur un boyau s'éjectant d'un outil d'extrusion

(30) Priorität: 21.09.2006 DE 102006045101
(43) Veröffentlichungstag der Anmeldung: 26.03.2008
(73) Patentinhaber: Sobotta, Andreas, 52064 Aachen (DE)
(72) Erfinder: Sobotta, Andreas, 52064 Aachen (DE)
(74) Vertreter: Bauer, Dirk

(56) Entgegenhaltungen:
- EP-A- 0 425 943
- WO-A-93/19862
- DE-A1- 3 535 470
- FR-A- 2 207 016
- GB-A- 2 394 283

## Beschreibung

Die Erfindung betrifft ein Verfahren zur Bestimmung einer Ortskoordinate eines Punkts an einem aus einem Extrusionswerkzeug dringenden Strangs, wobei zunächst von dem Strang unmittelbar an dem Extruderkopf eine Schubprobe abgetrennt und anschließend die Ortskoordinate gemessen wird, sowie Verfahren zur Bestimmung eines Qualitätsmerkmals eines Extrusionswerkzeugs, einer Extrusionsvorrichtung oder eines Materials zur Herstellung eines Profils.

Allgemeine Verfahren zur Bestimmung von Ortskoordinate eines Punkts an einem aus einem Extrusionswerkzeug dringenden Strangs sind aus EP 0 425 943 A2 und GB 2 394 283 A bekannt.

In Extrusionsvorrichtungen werden in der Kunststoff und Lebensmittelindustrie feste bis dickflüssige Massen unter hohem Druck und bei hoher Temperatur, je nach extrudiertem Material unter bis zu 700 bar und bei bis zu 300° C gleichmäßig aus einer formgebenden Öffnung eines Extrusionswerkzeugs, des herausgepresst. Das Extrusionswerkzeug wird auch als "Extruderkopf", Extrusionswerkzeug und formgebende Öffnung auch synonym als "Düse" bezeichnet. Bei der Extrusion insbesondere von Hohlstrangen und Rohren wird der Strang nach dem Austritt aus dem Extrusionswerkzeug in einem Kalibriertisch in die Form des gewünschten Profils gebracht und solange in dieser Form gehalten, bis er erstarrt ist. So wird ein Verformen, insbesondere ein Zusammenfallen des Strangs vermieden.

Zur Herstellung eines Extrusionswerkzeugs für ein neues Profil, insbesondere für komplexe Profile zur Herstellung von Fensterrahmen, wird hinsichtlich der Details der Gestaltung im Wesentlichen auf Erfahrungswerte zurückgegriffen. Ein solches neu konstruiertes Extrusionswerkzeug ist in aller Regel noch nicht für den Einsatz in der Produktion geeignet, sondern wird anhand von Testläufen iterativ verbessert, bis es eine für die Produktion brauchbare Strangqualität liefert.

Zur Bestimmung der Qualität eines aus dem Extrusionswerkzeug dringenden Strangs ist es allgemein bekannt, unmittelbar am Extrusionswerkzeug eine Schubprobe in definierter Länge manuell abzutrennen und diese - nach dem Abkühlen - mittels Messschieber an zuvor bestimmten Stellen räumlich zu vermessen. Anhand der geometrischen Informationen erkennt der erfahrene Konstrukteur, an welchen Stellen zu viel oder zu wenig Schmelze aus der formgebenden Öffnung des neuen Extrusionswerkzeugs dringt und erweitert die formgebende Öffnung oder die zu dieser führenden Kanäle des Extrusionswerkzeugs, um die gewünschte Ausbildung des Strangs zu erzielen.

Die in dem bekannten Verfahren gewonnenen Messdaten und die Daten der jeweils vorgenommenen Modifikation werden im Allgemeinen in ein Archiv - beispielsweise in Form einer Tabelle - übertragen und mit zuvor oder später zur Bestimmung der Qualität gemessenen Daten anderer Schubproben verglichen. Dieses Archiv bildet dann die Grundlage für spätere neue Konstruktionen ähnlicher Extrusionswerkzeuge.

Das bekannte Verfahren ist zunächst prinzipiell in hohem Maße abhängig von der messtechnischen Erfahrung der ausführenden Person. Darüber hinaus ist aber auch schon die Gewinnung des Messobjekts, nämlich das Abtrennen der Schubprobe von dem aus dem Extrusionswerkzeug dringenden Strang mit erheblichen Fehlerquellen behaftet:

Die Schubprobe wird in heißem, also noch leicht plastisch formbaren, Zustand von dem Strang abgetrennt. Abgesehen davon, dass die Handhabung mit bloßen Händen nicht möglich ist (und die Schubprobe aus diesem Grund häufig zunächst in einem Behälter aufgefangen wird), führt jede Berührung zwangsläufig zu einer Formänderung - und damit an den betroffenen Punkten letztlich zu einem von den ursprünglichen Werten abweichenden Messwert.

Weiterhin ändert die Schubprobe auch ohne Manipulation allein durch die Abkühlung in Schrumpfungsprozessen ihre Form. Da die Schrumpfung bei komplexen geometrischen Figuren wie Fensterprofilen keineswegs gleichmäßig abläuft, entstehen auch hier wieder regelmäßig erhebliche Abweichungen gegenüber den zum Zeitpunkt des Abtrennens vorhandenen Werten, die sich auch nicht durch Anwendung trivialer Algorithmen korrigieren lassen.

### Aufgabe

Der Erfindung liegt die Aufgabe zugrunde, die Fehlermöglichkeiten bei der Bestimmung einer Ortskoordinate eines Punkts an einem extrudierten Strang zu vermindern.

### Lösung

Ausgehend von den bekannten Verfahren zur Bestimmung einer Ortskoordinate eines Punkts an einem aus einem Extrusionswerkzeug dringenden Strang wird nach der Erfindung vorgeschlagen, dass die Ortskoordinate unmittelbar nach dem Abtrennen der Schubprobe berührungslos an dem weiter aus dem Extrusionswerkzeug dringenden Strang gemessen wird. Die Messung an dem Strang - anstelle der Messung an der Schubprobe - vermeidet zunächst die mit der Handhabung der Schubprobe verbundenen Fehlerquellen und ermöglicht so eine signifikant höhere Genauigkeit und Wiederholbarkeit der Messungen.

Die Messung unmittelbar am Strang erfordert gegenüber dem bekannten Verfahren einen Wechsel des Messverfahrens: Mechanisch abtastende Messschieber können aufgrund der üblichen Extrusionsgeschwindigkeiten zwischen 1 und 5 m/min nicht mehr zum Einsatz kommen. Grundsätzlich geeignet sind alle Messverfahren, die keine Berührung des gemessenen Objekts erfordern. Dies sind insbesondere Messverfahren, die ein Objekt anhand der von diesem abgestrahlten oder reflektierten elektromagnetischen Wellen erfassen, also zum Beispiel optische Messverfahren im Bereich des sichtbaren Lichts oder - zur Erstellung von Wärmebildern - im infraroten Bereich, sowie akustische Messungen mittels Ultraschall.

Die Messung am Strang wird vorzugsweise in geringem Abstand zum Extrusionswerkzeug, insbesondere in einem Abstand von weniger als 10 cm, bevorzugt sogar weniger als 2 cm ausgeführt.

In einer bevorzugten Ausführungsform des erfindungsgemäßen Verfahrens wird eine räumliche Verteilung der Ortskoordinate gemessen. Bereits durch Verwendung zweier optischer Messelemente und rechnergestützte Stereoskopie durch Überlagerung zweier gleichzeitiger Messungen der Messelemente können räumliche Abbilder der Ortskoordinate - primär also der Oberflächengeometrie bestimmt werden. Durch eine weiter erhöhte Anzahl der Messelemente wird die Genauigkeit des räumlichen Abbilds und damit der Messung insgesamt erhöht. (Auch eine Anordnung aus einem oder mehreren Messelementen und einer Hard- und Softwareeinrichtung zur Ermittlung und Darstellung eines räumlichen Abbilds aus mehreren einzelnen Messwerten wird im Rahmen dieser Anmeldung entsprechend dem allgemeinen Sprachgebrauch als "Messeinrichtung", der mit dieser ausgeführte Vorgang bis hin zur räumlichen Darstellung - ebenso wie der elementar mit dem einzelnen Messelement ausgeführte Vorgang - als "Messen" bezeichnet.)

In einer weiterhin bevorzugten Ausführungsform des erfindungsgemäßen Verfahrens wird eine zeitliche Entwicklung der Ortskoordinate gemessen. So kann die lokale Geschwindigkeit - oder ein räumliches Geschwindigkeitsprofil über eine Mehrzahl von Punkten - gemessen werden.

Eine solche Messung der Geschwindigkeit kann insbesondere derart erfolgen, dass zu zwei in einem kurzen zeitlichen Abstand aufeinander folgenden Zeitpunkten jeweils eine Ortskoordinate eines Punkts gemessen und über den Abstand der Ortskoordinaten und den zeitlichen Abstand die Geschwindigkeit des Punkts bestimmt wird. Auch hier kann die Genauigkeit der Messung durch Erhöhung der gemessenen Zeitpunkte verbessert werden.

Eine Geschwindigkeit kann auch basierend auf einer akustischen Messung (insbesondere mit Ultraschall) durch Auswertung des Doppler-Effekts gemessen werden. Weiterhin kann eine Geschwindigkeit durch Bezugnahme auf den Zeitpunkt des Abschneidens der Schubprobe auf Basis einer einzelnen Momentaufnahme gemessen werden. Letzteres setzt voraus, dass das Abschneiden automatisch erfolgt und mit Verzögerung die Momentaufnahme auslöst.

Besonders bevorzugt wird im Rahmen eines erfindungsgemäßen Verfahrens außerdem eine Temperatur des Punkts gemessen. Die Kenntnis der Temperatur des Strangs - insbesondere der lokalen Temperaturen in der Schnittfläche - ermöglicht die Identifikation prozesstechnischer Schwachstellen bei der Herstellung des Profils. In ähnlicher Weise können mit entsprechenden Messeinrichtungen Farbverteilungen und geometrische Formtreue (das so genannte "Schwellen") an einzelnen Punkten des Strangs, in räumlichen Profilen und in ihren zeitlichen Verläufen gemessen werden.

Nach der Erfindung wird auch ein Verfahren zur Bestimmung eines Qualitätsmerkmals eines Extrusionswerkzeugs vorgeschlagen, wobei zunächst unter Verwendung eines normierten Materials zur Herstellung eines Profils, einer normierten Extrusionsvorrichtung und normierter Einstellungen der Extrusionsvorrichtung gemäß einem Verfahren nach einem der vorgenannten Ansprüche mindestens eine Ortskoordinate eines aus dem Extrusionswerkzeug dringenden Strangs gemessen und sodann unter Verwendung der mindestens einen Ortskoordinate das Qualitätsmerkmal bestimmt wird. Die zeitliche Entwicklung eines derartigen Qualitätsmerkmals über eine Mehrzahl von Messzeitpunkten kann beispielsweise ein Maß für den Verschleiß des Extrusionswerkzeugs sein und bei Unterschreiten eines vordefinierten Kennwerts im Rahmen der Qualitätssicherung Überarbeitung oder Ersatz des Extrusionswerkzeugs auslösen.

Außerdem wird nach der Erfindung ein Verfahren zur Bestimmung eines Qualitätsmerkmals einer Extrusionsvorrichtung vorgeschlagen, wobei zunächst unter Verwendung normierter Einstellungen der Extrusionsvorrichtung, eines normierten Extrusionswerkzeugs und eines normierten Materials zur Herstellung eines Profils gemäß einem Verfahren nach einem der Ansprüche 1 bis 6 mindestens eine Ortskoordinate eines aus dem Extrusionswerkzeug dringenden Strangs gemessen und sodann unter Verwendung der mindestens einen Ortskoordinate das Qualitätsmerkmal bestimmt wird. Die zeitliche Entwicklung eines derartigen Qualitätsmerkmals über eine Mehrzahl von Messzeitpunkten kann beispielsweise ein Maß für den Verschleiß der Extrusionsvorrichtung sein und bei Unterschreiten eines vordefinierten Kennwerts im Rahmen der Qualitätssicherung den Austausch hier im Wesentlichen der Extruderschnecke (oder der Extruderschnecken) auslösen.

Weiterhin wird nach der Erfindung ein Verfahren zur Bestimmung eines Qualitätsmerkmals eines Materials zur Herstellung eines Profils vorgeschlagen, wobei zunächst unter Verwendung eines normierten Extrusionsvorrichtung, normierter Einstellungen der Extrusionsvorrichtung und eines normierten Extrusionswerkzeugs gemäß einem Verfahren nach einem der Ansprüche 1 bis 6 mindestens eine Ortskoordinate eines aus dem Extrusionswerkzeug dringenden Strangs gemessen und sodann unter Verwendung der mindestens einen Ortskoordinate das Qualitätsmerkmal bestimmt wird. Ein derartiges Qualitätsmerkmal kann beispielsweise ein Maß für die Alterung einer Charge des Materials sein und bei Unterschreiten eines vordefinierten Kennwerts im Rahmen der Qualitätssicherung den bevorzugten Verbrauch der Charge auslösen.

### Ausführungsbeispiel

Die Erfindung wird nachfolgend anhand eines Ausführungsbeispiels erläutert. Es zeigen
- Fig. 1: eine schematische Darstellung einer Strangpressanlage und
- Fig. 2: einer Extrusionsvorrichtung der Strangpressanlage mit einer Messeinrichtung sowie
- Fig. 3: eine schematische Draufsicht einer Erfassungsvorrichtung der Messeinrichtung.

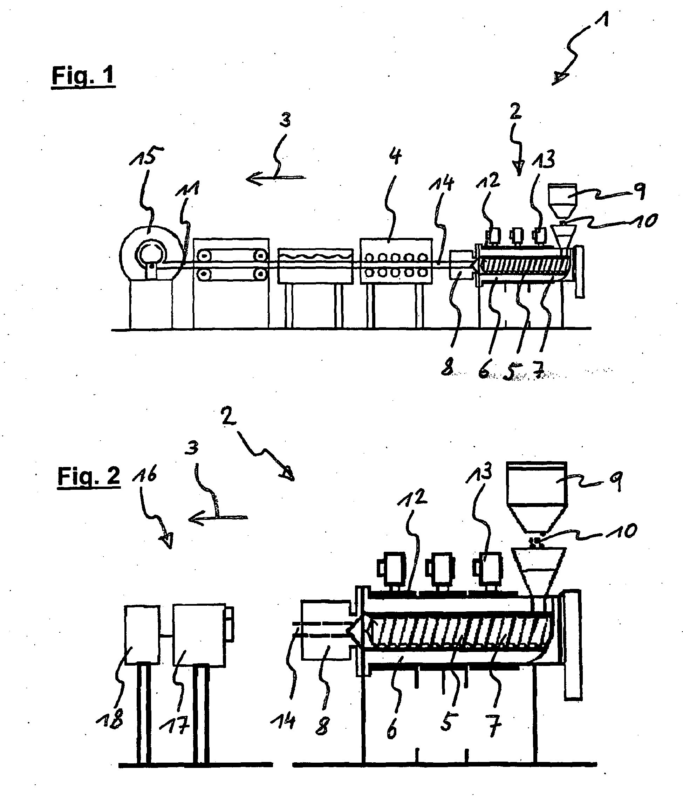

Die in Figur 1 gezeigte Strangpressanlage 1 mit einer Extrusionsvorrichtung 2 und einem in Materialflussrichtung 3 hinter diesem angeordneten Kaliber 4. Die Extrusionsvorrichtung 2 weist als zentrale Elemente einen Schneckenförderer 5 mit einer in einem Zylinder 6 rotierenden Schnecke 7 und mit einem Extrusionswerkzeug 8 auf. Der Schneckenförderer 5 wird einen Trichter 9 mit dem Material 10 zur Herstellung eines Profils 11 beschickt, über mehrere Heizbänder 12 beheizt und über mehrere Lüfter 13 belüftet.

Im Betrieb der Strangpressanlage 1 wird das Material 10 in dem Schneckenförderer 5 aufgeschmolzen und tritt als Strang 14 aus der nicht im Einzelnen dargestellten formgebenden Öffnung des Extrusionswerkzeugs 8 aus, der im Kaliber 4 in die gleichfalls nicht dargestellte Form des endgültigen Profils 11 gebracht, bis zum Abkühlen in dieser Form gehalten und schließlich von einer Säge 15 in produktionsübliche Längen gesägt wird.

Zur Bestimmung der (statischen) geometrischen Formtreue, sowie der Geschwindigkeit und der Temperatur über der Oberfläche eines aus dem Extrusionswerkzeug 8 dringenden Strangs 14 gemäß einem erfindungsgemäßen Verfahren ist in Materialflussrichtung 3 unmittelbar hinter dem Extrusionswerkzeug 8 gemäß Figur 2 eine Messeinrichtung 16 mit einer Erfassungsvorrichtung 17 und einer Auswertungsvorrichtung 18 angebracht.

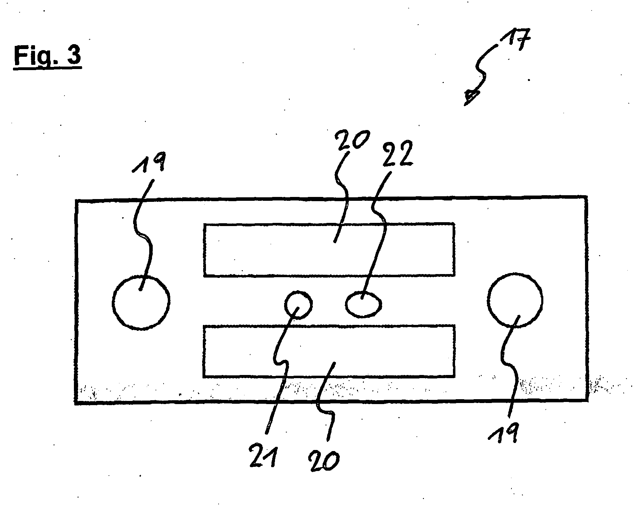

Die in Figur 3 noch einmal schematisch in einer Draufsicht dargestellte Erfassungsvorrichtung 17 weist zwei optische Kameras 19, zwei Beleuchtungen 20, eine Laser-Projektionseinheit 21, und eine Infrarotkamera 22 auf. Darüber hinaus weist die Messeinrichtung 16 eine nicht dargestellte Schneideinrichtung zum Abtrennen der Schubprobe auf.

Eine Messung mit dieser Messeinrichtung 16 kann wie folgt beschrieben werden: Zunächst wird die Laser-Projektionseinheit 21 eingeschaltet und projiziert in einem (horizontalen und vertikalen) Rasterabstand von 1 mm Lichtpunkte auf die formgebende Öffnung und auf den austretenden Strang 14. Je nach gegebenen Lichtverhältnissen ist es vorteilhaft, wenn die obere und die untere Beleuchtung 20 zugeschaltet werden. Die erforderlichen Aufnahmeparameter und die Zahl der Aufnahmen werden entweder mittels einer entsprechenden Software vorgeschlagen oder unmittelbar von einem Bediener bestimmt.

Die Aufnahmen der beiden optischen Kameras 19 folgen automatisch in kurzem zeitlichem Abstand nach dem Abtrennen der Schubprobe mittels der Schneideinrichtung. Alternativ können mit derselben Messeinrichtung 16 auch - insbesondere nach manuellem Abtrennen der Schubprobe - im Abstand von 1/15 Sekunde zwei Aufnahmen je Kamera 19 ausgelöst werden.

Die von den Kameras 19 erzeugten Aufnahmen werden in eine Auswertungssoftware in der Auswertungsvorrichtung 18 geladen. Anschließend kann eine Auswahl der auszuwertenden Aufnahmen vorgenommen werden. Weiter wird eine automatische oder manuelle Korrektur der Bilder vorgenommen. Darüber hinaus kann eine automatische oder manuelle Auswahl des Algorithmus zur 3D-Punktberechnung bestimmt werden. Nun startet die automatische Berechnung der Geschwindigkeit, der Temperatur und der geometrischen Verformung über der räumlichen Oberfläche des Strangs 14.

In den Figuren sind
- 1: Strangpressanlage
- 2: Extrusionsvorrichtung
- 3: Materialflussrichtung
- 4: Kaliber
- 5: Schneckenförderer
- 6: Zylinder
- 7: Schnecke
- 8: Extrusionswerkzeug
- 9: Trichter
- 10: Material
- 11: Profil
- 12: Heizband
- 13: Lüfter
- 14: Strang
- 15: Säge
- 16: Messeinrichtung
- 17: Erfassungsvorrichtung
- 18: Auswertungsvorrichtung
- 19: Kamera
- 20: Beleuchtung
- **21**: Laser-Projektionseinheit
- 22: Infrarotkamera

## Patentansprüche

1. Verfahren zur Bestimmung einer Ortskoordinate eines Punkts an einem aus einem Extrusionswerkzeug (8) dringenden Strang (14), wobei zunächst von dem Strang (14) unmittelbar an dem Extruderkopf eine Schubprobe abgetrennt und anschließend die Ortskoordinate gemessen wird, ***dadurch gekennzeichnet, dass*** die Ortskoordinate unmittelbar nach dem Abtrennen der Schubprobe berührungslos an dem weiter aus dem Extrusionswerkzeug (8) dringenden Strang (14) gemessen wird.

2. Verfahren nach dem vorgenannten Anspruch, ***dadurch gekennzeichnet, dass*** eine räumliche Verteilung der Ortskoordinate gemessen wird.

3. Verfahren nach einem der vorgenannten Ansprüche, ***dadurch gekennzeichnet, dass*** eine zeitliche Entwicklung der Ortskoordinate gemessen wird.

4. Verfahren nach einem der vorgenannten Ansprüche, ***dadurch gekennzeichnet, dass*** unter Verwendung der Ortskoordinate eine Geschwindigkeit des Punkts ermittelt wird.

5. Verfahren nach dem vorgenannten Anspruch, ***dadurch gekennzeichnet, dass*** die Geschwindigkeit aus einem räumlichen Abstand zweier an in einem kurzen zeitlichen Abstand aufeinander folgenden Zeitpunkten gemessenen Ortskoordinaten ermittelt wird.

6. Verfahren nach einem der vorgenannten Ansprüche, ***dadurch gekennzeichnet, dass*** außerdem eine Temperatur des Punkts gemessen wird.

7. Verfahren zur Bestimmung eines Qualitätsmerkmals eines Extrusionswerkzeugs (8), wobei zunächst unter Verwendung eines normierten Materials (10) zur Herstellung eines Profils (11) , einer normierten Extrusionsvorrichtung (2) und normierter Einstellungen der Extrusionsvorrichtung (2) gemäß einem Verfahren nach einem der vorgenannten Ansprüche mindestens eine Ortskoordinate eines aus dem Extrusionswerkzeug (8) dringenden Strangs (14) gemessen und sodann unter Verwendung der mindestens einen Ortskoordinate das Qualitätsmerkmal bestimmt wird.

8. Verfahren zur Bestimmung eines Qualitätsmerkmals einer Extrusionsvorrichtung (2), wobei zunächst unter Verwendung normierter Einstellungen der Extrusionsvorrichtung (2), eines normierten Extrusionswerkzeugs (8) und eines normierten Materials (10) zur Herstellung eines Profils (11) gemäß einem Verfahren nach einem der Ansprüche 1 bis 6 mindestens eine Ortskoordinate eines aus dem Extrusionswerkzeug (8) dringenden Strangs (14) gemessen und sodann unter Verwendung der mindestens einen Ortskoordinate das Qualitätsmerkmal bestimmt wird.

9. Verfahren zur Bestimmung eines Qualitätsmerkmals eines Materials (10) zur Herstellung eines Profils (11), wobei zunächst unter Verwendung eines normierten Extrusionsvorrichtung (2), normierter Einstellungen der Extrusionsvorrichtung (2) und eines normierten Extrusionswerkzeugs (8) gemäß einem Verfahren nach einem der Ansprüche 1 bis 6 mindestens eine Ortskoordinate eines aus dem Extrusionswerkzeug (8) dringenden Strangs (14) gemessen und sodann unter Verwendung der mindestens einen Ortskoordinate das Qualitätsmerkmal bestimmt wird.

## Claims

1. A method for determining a location coordinate of a point on a strand (14) pressing out of an extrusion tool (8), wherein a batch sample is initially separated from the strand (14) directly at the extruder head and subsequently the location coordinate is measured, **characterised in that** the location coordinate is measured contactlessly on the strand (14) pressing further out of the extrusion tool (8) directly after the separation of the batch sample.

2. The method according to the preceding claim, **characterised in that** a spatial distribution of the location coordinate is measured.

3. The method according to any one of the preceding claims, **characterised in that** a temporal development of the location coordinate is measured.

4. The method according to any one of the preceding claims, **characterised in that** a speed of the point is established using the location coordinate.

5. The method according to the preceding claim, **characterised in that** the speed is established from a spatial distance of two location coordinates measured at times following one another in a short time interval.

6. The method according to any one of the preceding claims, **characterised in that**, in addition, a temperature of the point is measured.

7. A method for determining a quality characteristic of an extrusion tool (8), wherein initially using a standardised material (10) for the production of a profile (11), a standardised extrusion device (2) and standardised settings of the extrusion device (2) according to a method according to any one of the preceding claims, at least one location coordinate of a strand (14) pressing out of the extrusion tool (8) is measured and, after that, the quality characteristic is determined using the at least one location coordinate.

8. A method for determining a quality characteristic of an extrusion device (2), wherein initially using standardised settings of the extrusion device (2), a standardised extrusion tool (8) and a standardised material (10) for the production of a profile (11) according to a method according to any one of the Claims 1 to 6, at least one location coordinate of a strand (14) pressing out of the extrusion tool (8) is measured and, after that, the quality characteristic is determined using the at least one location coordinate.

9. A method for determining a quality characteristic of a material (10) for the production of a profile (11), wherein initially using a standardised extrusion device (2), standardised settings of the extrusion device (2), and a standardised extrusion tool (8) according to a method according to any one of the Claims 1 to 6, at least one location coordinate of a strand (14) pressing out of the extrusion tool (8) is measured and, after that, the quality characteristic is determined using the at least one location coordinate.

## Revendications

1. Procédé pour déterminer une coordonnée locale d'un point sur une barre (14) sortant d'un outil d'extrusion (8), un échantillon de poussée étant séparé d'abord de la barre (14) directement sur la tête d'extrudeuse et la coordonnée locale étant mesurée ensuite, **caractérisé en ce que** la coordonnée locale est mesurée directement après la séparation de l'échantillon de poussée sans contact sur la barre (14) continuant de sortir de l'outil d'extrusion (8).

2. Procédé selon la revendication précédente, **caractérisé en ce qu'**une répartition dans l'espace de la coordonnée locale est mesurée.

3. Procédé selon l'une quelconque des revendications précédentes, **caractérisé en ce qu'**une évolution dans le temps de la coordonnée locale est mesurée.

4. Procédé selon l'une quelconque des revendications précédentes, **caractérisé en ce qu'**une vitesse du point est déterminée en utilisant la coordonnée locale.

5. Procédé selon la revendication précédente, **caractérisé en ce que** la vitesse est déterminée à partir d'une distance dans l'espace entre deux coordonnées locales mesurées à des instants qui se suivent dans un court intervalle de temps.

6. Procédé selon l'une quelconque des revendications précédentes, **caractérisé en ce qu'**également une température du point est mesurée.

7. Procédé pour déterminer une caractéristique de qualité d'un outil d'extrusion (8), dans lequel au moins une coordonnée locale d'une barre (14) sortant de l'outil d'extrusion (8) est mesurée d'abord en utilisant un matériau (10) normalisé pour fabriquer un profilé (11), un dispositif d'extrusion (2) normalisé et des réglages normalisés du dispositif d'extrusion (2) conformément à un procédé selon l'une quelconque des revendications précédentes et la caractéristique de qualité étant déterminée ensuite en utilisant la au moins une coordonnée locale.

8. Procédé pour déterminer une caractéristique de qualité d'un dispositif d'extrusion (2), dans lequel au moins une coordonnée locale d'une barre (14) sortant de l'outil d'extrusion (8) est mesurée d'abord en utilisant des réglages normalisés du dispositif d'extrusion (2), un outil d'extrusion (8) normalisé et un matériau (10) normalisé pour la fabrication d'un profilé (11) conformément à un procédé selon l'une quelconque des revendications 1 à 6 et la caractéristique de qualité est déterminée ensuite en utilisant la au moins une coordonnée locale.

9. Procédé pour déterminer une caractéristique de qualité d'un matériau (10) pour fabriquer un profilé (11), dans lequel au moins une coordonnée locale d'une barre (14) sortant de l'outil d'extrusion (8) est mesurée en utilisant un dispositif d'extrusion (2) normalisé, des réglages normalisés du dispositif d'extrusion (2) et un outil d'extrusion (8) normalisé conformément à un procédé selon l'une quelconque des revendications 1 à 6 et la caractéristique de qualité est déterminée ensuite en utilisant la au moins une coordonnée locale.
